## Europäisches Patentamt
## European Patent Office
## Office européen des brevets

(19)

(11) Veröffentlichungsnummer: **0 039 754**
**B1**

(12)

# EUROPÄISCHE PATENTSCHRIFT

(45) Veröffentlichungstag der Patentschrift:
**14.12.83**

(21) Anmeldenummer: **80710012.8**

(22) Anmeldetag: **10.05.80**

(51) Int. Cl.³: **A 47 J 37/10, A 47 J 36/06**

(54) Abdeckung für Bratpfannen od. dgl. Brat- oder Kochgefässe.

(43) Veröffentlichungstag der Anmeldung:
**18.11.81 Patentblatt 81/46**

(45) Bekanntmachung des Hinweises auf die Patenterteilung:
**14.12.83 Patentblatt 83/50**

(84) Benannte Vertragsstaaten:
**AT BE CH FR IT LI NL SE**

(56) Entgegenhaltungen:
**DE - A - 2 702 857**
**DE - C - 188 401**
**DE - C - 534 591**
**DE - U - 7 918 297**
**US - A - 1 427 796**
**US - A - 1 622 351**
**US - A - 2 587 773**
**US - A - 2 696 816**
**US - A - 3 528 236**
**US - A - 4 108 332**

(73) Patentinhaber: **Meurer Nonfood Product GmbH, Libellenweg 10, D-7760 Radolfzell (DE)**

(72) Erfinder: **Vossen, Franz, Höhenstrasse 30, D-7768 Stockach (DE)**

(74) Vertreter: **Hiebsch, Gerhard F., Dipl.-Ing., Erzbergerstrasse 5A Postfach 464, D-7700 Singen 1 (DE)**

Abdeckung für Bratpfannen od. dgl. Brat- oder Kochgefässe

Die Erfindung betrifft eine Abdeckung für Bratpfannen od. dgl. Brat- oder Kochgefässe mit einem dampfdurchlässigen Filterpapier und diesem zugeordnetem Tragring.

Eine derartige Abdeckung ist der US-PS 1 622 351 zu entnehmen mit einem Metallring und einer an diesem von Metallzungen und einer zentrischen Platte gehaltenen Filterscheibe aus durchlöchertem Löschpapier, das für häufigen Gebrauch bestimmt ist. Hierbei ergeben sich erhebliche Gebrauchsmängel, die noch deutlicher bei der US-PS 3 528 236 hervortreten, mit der für eine Einheit aus Bratpfanne und angepasstem Deckel vorgeschlagen wird, letzteren aus zwei konzentrischen Metallringen unterschiedlichen Durchmessers und einem zwischen diese Metallringe eingeklemmten Filtertuch zu gestalten. Der innere Metallring weist speichenartige Stege auf, die im Ringmittelpunkt einen Griff tragen. Dieser ist vor allem dann erforderlich, wenn das unter Faltenbildung zwischen der Aussenfläche des inneren Metallringes und der Innenfläche des Aussenringes klemmend gehaltene Filtertuch entfernt werden soll; der zur sicheren Handhabung unerlässliche feste Sitz der stickrahmenartig zusammengefügten Einzelteile setzt bei deren Trennung einen nicht unerheblichen Kraftaufwand voraus.

Das vor dem Bratvorgang eingelegte Filtertuch ist nach diesem voll des aufgefangenen Spritzfettes, welches im Bereich der Klemmzone auf zwischen die miteinander verklemmten Teile eingedrungen ist. War der Benutzer vor dem Braten genötigt, die Abdeckung zusammenzusetzen und dann die aus den rohrstumpfförmigen Ringen herausragenden Tuchreste zu beschneiden, so ist er nach dem Braten gehalten, die beiden aus Stabilitätsgründen mit jenen Radialarmen ausgestatteten Metallringe nach ihrem Abkühlen auseinanderzunehmen und mühevoll zu reinigen.

Angesichts dieser Gegebenheiten ist es Ziel der Erfindung, die Hygiene solcher gegenüber dem entstehenden Dampf durchlässiger, mit diesem aufsteigende Fettpartikel fangender Abdeckungen zu verbessern, ohne die Hausfrau zu zwingen, die Verspannung der Tragringe lösen zu müssen, um das fettige Tuch nach Gebrauch auszuwechseln. Darüber hinaus soll die Beschränkung der Einsatzmöglichkeit der Abdeckung auf einen bestimmten Pfannendurchmesser sowie deren Exklusivität beseitigt werden; die Herstellung zweiteiliger Tragringe in einer üblichen Haushaltsgeräten angepassten gefälligen Gestaltung ist sehr kostenintensiv, was ihre Verwendung in manchem Haushalt ausschliesst.

Zur Lösung dieser Aufgabe führt, dass der Tragring aus einer Werkstoffscheibe von Karton herausgeschnitten und dass das Filterpapier auf den Tragring aufgeklebt ist.

Als kaschierfähiges Filterpapier kann beispielsweise jenes dienen, welches zur Filtration von Kaffee bekannt ist, also ein marktüblicher Werkstoff. Auch der Tragring selbst besteht aus handelbarem Karton, so dass die Materialkosten in Grenzen gehalten werden können. Letzteres trifft auch für die Herstellung zu, da man diese auf einen Stanz- und Kaschiervorgang in einer einzigen Maschine beschränken kann - insbesondere dann, wenn aus einer Kartonscheibe von Tragring und Radialarmen begrenzte Sektorfelder ausgeschnitten und mit Filterpapier od. dgl. ausgefacht sind.

Zur Vereinfachung der Handhabung kann ein nach oben ragender Griff im Rahmen dieser Erfindung aus der Kartonscheibe so herausgestaltet sein, dass an den Radialarmen hängende, teilweise ausgestanzte zungenartige Laschen aus der Ebene der Materialscheibe herausgebogen und durch Steckorgane miteinander zu einem Hubring oder Henkel verbunden werden. Dank dieser Massgabe ist der für die Hausfrau zur Inspektion des Bratvorganges wichtige Griff ohne zusätzliche Kosten herstellbar und stört vor allem vor Gebrauch nicht; die erfindungsgemässen Abdeckungen sind vor dem Herausbiegen der Zungenlaschen dünne Scheiben und als solche problemlos stapel- und verpackbar.

Es wird deutlich, dass es sich bei der erfindungsgemässen Abdeckung trotz des Hubgriffes um einen unkomplizierten und preiswerten Wegwerfgegenstand handelt, der günstig in Lagerhaltung und Handhabung bleibt, der aber auch erlaubt auf eine Reinigung zu verzichten; sobald eine andere Abdeckung von Bratfetten und gleichen gereinigt werden muss, wird sie erfahrungsgemäss nur noch selten verwendet.

Als weitere Vorzüge sind anzusehen, dass die scheibenartige Abdeckung ohne weiteres für Bratpfannen od. dgl. unterschiedlicher Durchmesser benutzt sowie gegebenenfalls in zusätzlichen Umfangsringen festgelegt zu werden vermag; es ist sogar möglich, einen dem rohrstumpfartigen Rahmen nach der US-PS 3 528 236 ähnlichen Gegenstand durch die erfindungsgemässe Abdeckung zu ergänzen. Dann ist der sich in der Ebene der Abdeckung befindliche Tragring in dem dazu etwa rechtwinkeligen Rahmen austauschbar festgelegt.

Zudem kann der Verbindungsbereich zwischen dem aufstellbaren Umfangsring einerseits und der dazu rechtwinkeligen Abdeckung in seinem Abstand zum Stellrand des Umfangsringes veränderlich ausgebildet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1 die Draufsicht auf eine Bratpfanne mit Abdeckung;

Fig. 2 den vergrösserten Radialschnitt durch Fig. 1 nach deren Linie II-II;

Fig. 3 ein vergrössertes Detail aus Fig. 2 in Schrägsicht;

Fig. 4 einen der Darstellung in Fig. 2 entsprechenden Schnitt durch eine weitere Ausführungsform einer Bratpfanne;

Fig. 5 eine Teildraufsicht auf Fig. 4.

Dem Rand 1 einer Bratpfanne 2 mit Stiel 3 liegt eine Kartonscheibe 4 mit dem Radius r von beispielsweise 150 mm aus Karton auf, aus welcher vier Sektorfelder 5 herausgestanzt sind; die verbleibenden Teile der Kartonscheibe 4 ergeben so einen Randring 6 der Breite b von 20 mm sowie speichenartige Radialarme 7, die im Scheibenmittelpunkt M in ein Zentralfeld 8 der Kartonscheibe 4 übergehen.

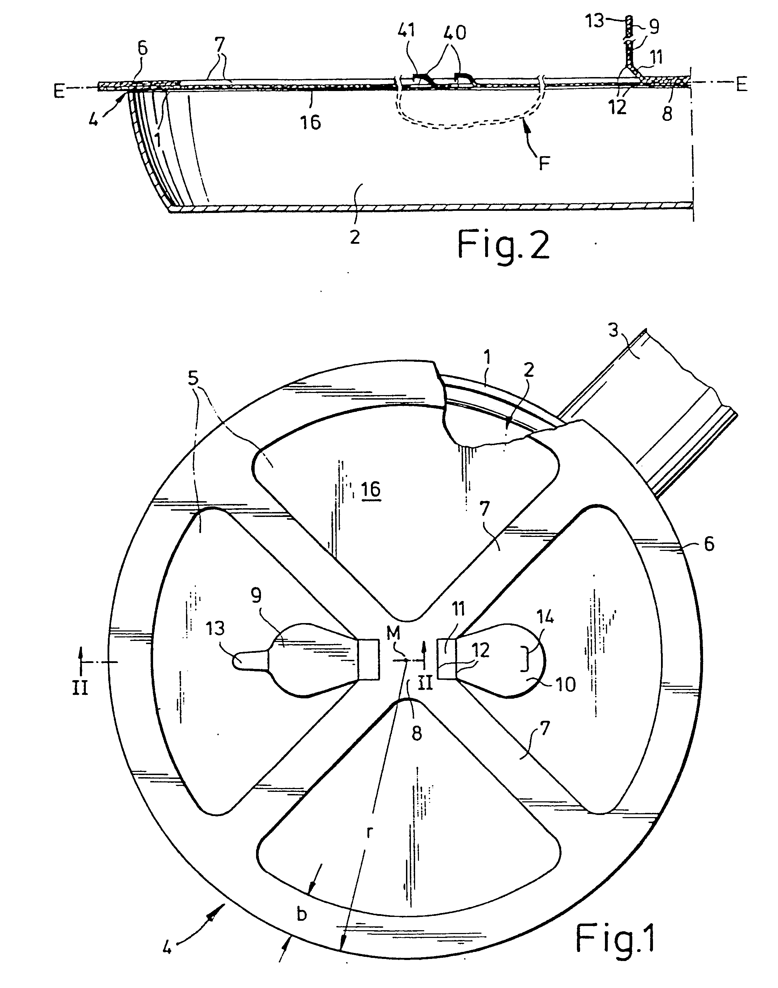

In zwei einander gegenüberliegenden Sektorfeldern 5 ist jeweils eine zungenförmige Lasche 9, 10 verblieben, von denen jede — ebenfalls beim Stanzvorgang aus der Kartonscheibe 4 geschnitten — mit einem schmalen Streifen 11 an jenes Zentralfeld 8 angeschlossen ist; der Streifen 11 wird beidseits durch Knicklinien 12 begrenzt und kann aus der Scheibenebene E herausgebogen werden, wie Fig. 2 verdeutlicht.

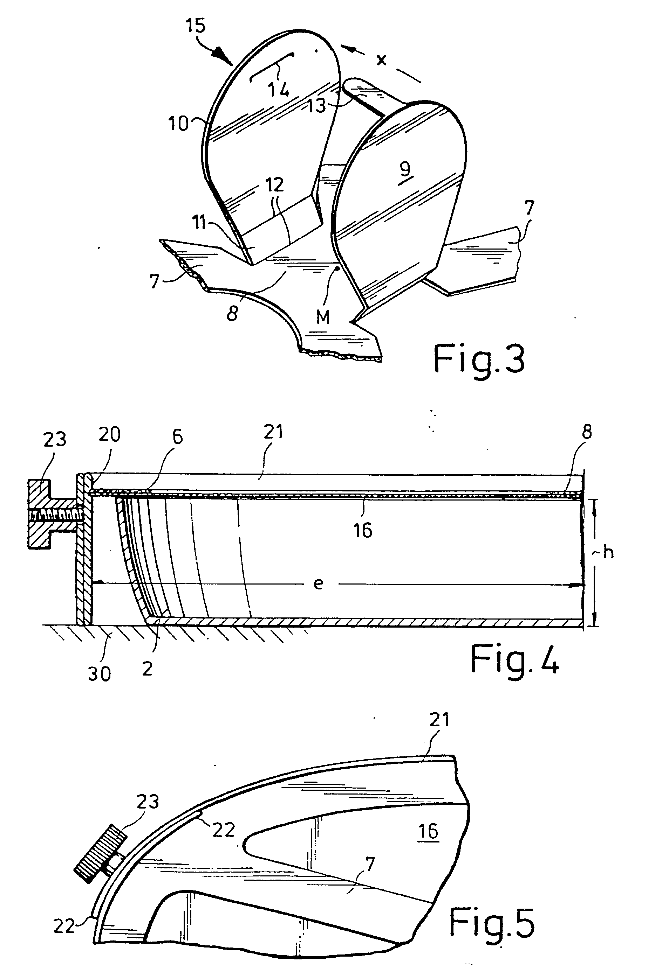

Die eine Lasche 9 ist mit einem Steckansatz 13 versehen, der — in abgeknickter Stellung der Laschen 9, 10 — in einen Schlitz 14 der Gegenlasche 10 in Richtung x so einschiebbar ist (Fig. 3), dass beide Laschen 9, 10 miteinander einen Tragring 15 bilden.

Unterhalb der Kartonscheibe 4 bzw. des Randringes 6 und der Radialarme 7 ist ein Bogen 16 aus Filterzellulose gespannt und verklebt, der die Sektorfelder 5 untergreift - bei anderen Ausführungsformen mag der Filterbogen 16 oder eine Mehrzahl von diesem auch die Kartonscheibe 4 überspannen.

Beim Ausführungsbeispiel der Fig. 4 und 5 ist die Kartonscheibe 4 bei 20 in einen Ring 21 eingeklemmt, dessen Radius e (Fig. 4) veränderlich ist. Hierzu überlappen die freien Enden 22 des Stellringes 21 einander und sind durch eine Klemmschraube 23 in einer bestimmten Stellung miteinander fest verbindbar.

Die zum Einklemmen der Kartonscheibe 4 im Bereich 20 erforderlichen Klemmelemente sind in der Zeichnung übersichtlichkeitshalber vernachlässigt.

In der Draufsicht gemäss Fig. 5 wird angedeutet, dass derartige Kartonscheiben 4 und der Stellring 21 nicht nur kreisförmig sein können, sondern auch beispielsweise oval - die Form der Scheibe 4 kann beliebig gewählt werden in Abhängigkeit von dem abzudeckenden Bratgefäss. Auch kann die Einspannhöhe h gegenüber der Pfannenauflage 30 einstellbar sein, beispielsweise dank zweier konzentrisch ineinanderliegenden Stellringe 21, die gegeneinander verschiebbar sind.

Das Filterpapier 16 kann etwa jenem für Kaffeefilter entsprechen, jedoch auch mit Öffnungen 40 versehen sein (Fig. 2) über denen sich Stanzzungen 41 erstrecken. Der Ausschnitt F in Fig. 2 verdeutlicht, dass das Filterpapier dann in der Oberfläche etwa einer Kartoffelreibe ähnlich ist.

**Patentansprüche**

1. Abdeckung für Bratpfannen od. dgl. Brat- oder Kochgefässe mit einem dampfdurchlässigen Filterpapier (16) und diesen zugeordnetem Tragring (6), dadurch gekennzeichnet, dass der Tragring (6) aus einer Werkstoffscheibe (4) von Karton herausgeschnitten und dass das Filterpapier (16) auf den Tragring (6) aufgeklebt ist.

2. Abdeckung nach Anspruch 1, dadurch gekennzeichnet, dass aus der Kartonscheibe (4) von Tragring (6) und Radialarmen (7) begrenzte Sektorfelder (5) ausgeschnitten und mit dem Filterpapier (16) ausgefacht sind.

3. Abdeckung nach einem der Ansprüche 1 oder 2 mit etwa zentrischem Griffelement, dadurch gekennzeichnet, dass aus der Kartonscheibe (4) an den Radialarmen (7) hängende zungenartige Laschen (9, 10) ausgestanzt und zu einem Hubring (15) od. dgl. als Griffelement zusammengefasst sind.

4. Abdeckung nach Anspruch 3, dadurch gekennzeichnet, dass die Laschen (9, 10) aus der Ebene (E) der Kartonscheibe (4) herausbiegbar und durch Steckorgane (13, 14) miteinander verbindbar ausgebildet sind.

5. Abdeckung nach einem der Ansprüche 1 bis 4, dadurch gekennzeichnet, dass das Filterpapier (16) mit zumindest teilweise übergriffenen Öffnungen (40) versehen ist.

6. Abdeckung nach einem der Ansprüche 1 bis 5, dadurch gekennzeichnet, dass das Filterpapier (16) mit seinem Tragring (6) in einem zu dessen Ebene (E) etwa rechtwinkeligen Umfangsring (21) austauschbar festgelegt ist.

7. Abdeckung nach Anspruch 6, dadurch gekennzeichnet, dass der Verbindungsbereich (20) zwischen Umfangsring (21) einerseits und dem dazu rechtwinkeligen Filterpapier (16) bzw. Tragring (6) in seinem Abstand zum Stellrand des Umfangsringes veränderlich ist.

**Claims**

1. Cover for a frying pan or a similar frying or cooking container comprising a steam-pervious filter paper (16) and a support ring (6) relating to the said filter paper, wherein the support ring (6) is cut out of a disk (4) of cardboard material and the filter paper (16) being adhesively secured to said support ring (16).

2. Cover according to claim 1, wherein the disk of cardborad material includes sector-shaped windows (6) which are defined by the circumferential support ring (6) and radial arms (7), the said sector-shaped windows being covered with the said filter paper (16).

3. Cover according to claim 1 or 2, with a central grip, wherein tongue-shaped tabs (9, 10), which are cut out of the disk (4) of cardboard material and foldably attached to said radial arms (7), are brought together to form a lift ring (15) or like grip.

4. Cover according to claim 3, wherein said tabs (9, 10) are foldable in a position perpendicular to the plane (E) of the disk (4) of cardboard material include interengageable members (13, 14) to secure the tabs together to form said lift ring (15).

5. Cover according to one of claims 1 to 4, wherein said filter paper (16) is provided with openings (40) and cover means at least partially covering said openings (40).

6. Cover according to one of claims 1 to 5, wherein said filter paper (16) with its support ring (6) is replaceably engaged with a further circumferential ring (21), which is extending approximately at right angles to the plane of the support ring (6).

ou 2, caractérisé en ce que des languettes (9, 10) at-7. Cover according to claim 6, wherein the connecting region (20) between the circumferential ring (21) is on one side and the filter paper (16) or the support ring (6) resp. on the other hand, being situated at right angle to said circumferential ring (21), is adjustable as regards the distance to the foot rim of said circumferential ring (21).

**Revendications**

1. Couvercle pour poêles à frire ou des récipients à frire ainsi que des marmites semblables comprenant un papier filtrant d'un matériau fibreux perméable pour le vapeur et un anneau porteur attribué au papier filtrant, caractérisé en ce que l'anneau porteur (6) est découpé d'un disque de carton (4) et que le papier filtrant (16) est collé sur l'anneau porteur (6).

2. Couvercle suivant la revendication 1, caractérisé en ce que des champs à secteur (5), bordés par l'anneau porteur (6) et des nervures radiales (7), sont découpés du disque de carton (4) et recouvert du papier filtrant.

3. Couvercle comprenant un élément à poignée à peu près central suivant l'une des revendications 1 tachées aux nervures radiales (7) sont découpées du disque de carton (4) et réunies pour établir un élément à poignée sous forme d'une bague de levage (15) ou chose pareille.

4. Couvercle suivant revendication 3, caractérisé en ce que les languettes (9, 10) sont pliables en dehors du plan (E) du disque de carton (4) et façonnées de manière susceptible à être réunies l'un avec l'autre par des organes enfichables (13, 14).

5. Courvercle suivant l'une des revendications 1-4, caractérisé en ce que le papier filtrant (16) est muni d'ouvertures (40) au moins partiellement recouvertes.

6. Couvercle suivant l'une des revendications 1-5, caractérisé en ce que le papier filtrant (16) et son anneau porteur (6) sont fixés de manière remplaçable dans un anneau périphérique (21) disposé à peu près orthogonalement au plan (E).

7. Couvercle suivant la revendication 6, caractérisé en ce que le domaine de connexion (20) entre l'anneau périphérique (21) d'une part et le papier filtrant (16) ou l'anneau porteur (6) d'autre part est variable relativement à la distance vers le bord de réglage de l'anneau périphérique (21).

Fig.2

Fig.1

Fig.3

Fig.4

Fig.5